# EUROPEAN PATENT APPLICATION

(11) **EP 2 157 744 A1**
(43) Date of publication of application: **24.02.2010**
(21) Application number: 08784074.0
(22) Date of filing: 21.08.2008
(51) Int. Cl.: H04L 12/56, H04L 12/24

(54) **METHOD AND SYSTEM FOR CONTROLLING THE AUTHORIZATION OF SERVICE RESOURCE**

(30) Priority: 21.08.2007 CN 200710147344; 31.08.2007 CN 200710148478
(71) Applicant: Huawei Technologies Co., Ltd., Shenzhen, Guangdong 518129 (CN)
(72) Inventor: WANG, Peng, Shenzhen Guangdong 518129 (CN); QI, Baojian, Shenzhen Guangdong 518129 (CN); LEI, Xiaosong, Shenzhen Guangdong 518129 (CN)
(74) Representative: Charles, Glyndwr
(86) International application number: PCT/CN2008/072083
(87) International publication number: WO 2009/024092

(57) **Abstract**

A method for controlling authorization of service resources includes: by a Proxy Call Session Control Function (P-CSCF) entity, receiving a message that carries a list of resources allowed to be used from an SCF entity; and obtaining the list of resources allowed to be used from the message, and controlling authorization of resources requested by a User Equipment (UE) according to the list of resources allowed to be used. A system and device for controlling authorization of service resources are also disclosed. With the present invention, the services accessible to the user are authorized at a single attempt. Therefore, the service switching speed is increased without any impact on the flexibility of the user in selecting the list of accessible services; and the service availability and the user experience are enhanced significantly.

## Description

### Field of the Invention

The present invention relates to communication technologies, and in particular, to a method, system, and device for controlling authorization of service resources.

### Background of the Invention

Internet Protocol Television (IPTV) is a new technology that integrates multiple technologies such as Internet multimedia and communications, and provides multiple interactive services such as digital TV for home users by using a broadband cable TV network. A user may enjoy the IPTV service in two modes: via a computer, or via a network Set Top Box (STB) plus an ordinary TV set. IPTV is different from traditional analog cable TV, and different from digital TV. Compared with analog TV, digital TV is innovative, but the innovation involves only signal changes, without involving the mode of propagating the media content.

IP Multimedia Subsystem (IMS)-based IPTV provides IPTV services in an IMS architecture, and makes fully use of the mechanisms such as registration, authentication, routing, session control and creation, service triggering, charging, end-to-end Quality of Service (QoS) assurance in the IMS network to provide the user with the streaming service and the multimedia service which integrates the streaming service with the real-time session service. That is, the multimedia session from the user to the content is performed through an existing session control mechanism of the IMS. In the process of setting up the session, bearer resources need to be reserved for transmitting the media stream.

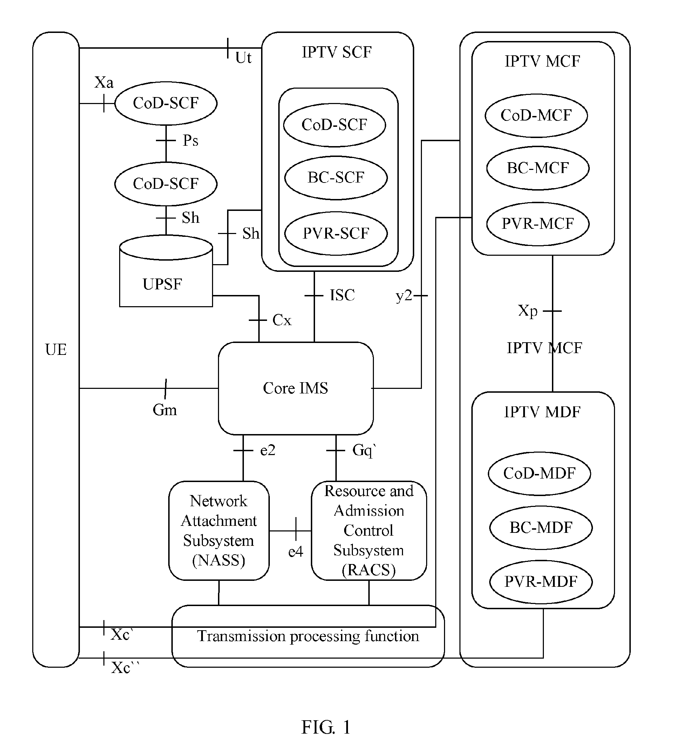

Currently, many standardization organizations are researching IMS-based IPTV. FIG. 1 shows an IMS-based IPTV service function architecture defined by the European Telecommunications Standards Institute, Telecommunications and Internet converged Services and Protocols for Advanced Networking (ETSI TISPAN).

In FIG. 1, the IPTV Service Control Function (SCF) controls the access to the user service, and the IPTV Media Function (MF) is responsible for controlling and delivering media streams for a User Equipment (UE). The IPTV MF may be divided into an IPTV Media Control Function (MCF) and an IPTV Media Delivery Function (MDF). Generally, the MDF is a media server which transmits the media streams required by the user to the UE under control of the MCF. The MCF is also capable of receiving and processing the play control operations of the user, for example, fast forward, fast rewind, pause, and positioning. Such operations are generally performed via a Real Time Streaming Protocol (RTSP).

IPTV UE service control is performed through a Gm interface between the IPTV UE and the core IMS (IMS core network), and an IMS Service Control (ISC) interface between the core IMS and the IPTV SCF. Such interfaces (including the interface between Call Session Control Functions (CSCFs) in the core IMS) are based on the Session Initiation Protocol (SIP).

SIP is an application-layer control protocol for setting up, modifying, and terminating multimedia sessions (or conferences) such as an Internet call. The SIP protocol also supports the function of inviting a participant to participate in an existing session, for example, a multi-party conference.

In IPTV, the Broadcast (BC) service is a service provided for a user in the BC mode, for example, Live TV or Linear TV (LTV). In the BC service, the UE or STB receives the broadcast TV program information, and displays the received program information to the user.

In the IMS network, a Proxy-CSCF (P-CSCF) is an entry for the UE to access the core network, and is responsible for authorizing the user to use the access network resources and processing the QoS for the user. In an IPTV system, the P-CSCF needs to reserve resources and perform authorization after the UE requests to join a multicast group or set up a unicast media channel.

The Serving-CSCF (S-CSCF) in the IMS checks the Session Description Protocol Offer/Answer (SDP O/A) interaction parameters and the user data to confirm that the user is able to set up the corresponding session and bearer channel. From the SDP O/A interaction in the session creation process, the P-CSCF obtains the detailed parameters of the session created by the user, and authorizes the access and reserves resources according to the parameters. The parameters include: IP address and port number of both parties involved in the session, transport-layer protocol or even application-layer protocol in use, mode of coding and decoding the media stream, required bandwidth, or any combination thereof.

When the service is deployed in the BC mode, the P-CSCF or the access network may store the mapping relation between the BC service identifier and the BC service parameters locally by means of configuration. The BC service parameters include: transport protocol for delivering the BC service contents, multicast address and port number, mode of coding and decoding the BC service, parameters required for coding and decoding, bandwidth required for the BC service, quality of the BC service contents, resolution degree, and BC service description information displayed to the user. In this case, the P-CSCF does not need to rely on the SDP O/A process between the UE and the SCF in transferring and obtaining the session information and transferring the resource authorization information such as the multicast group that the user can join. The required condition is that the SCF is able to transfer the information about the BC services accessible to the user to the P-CSCF through signaling messages in the process of setting up or modifying the session. The P-CSCF and the access network are responsible for adding the user to the session and authorizing the local resources at the time of BC service switching. The access network includes an access resource provision sub-network and a resource access control sub-network.

If the mapping relation between the BC service and the multicast address is stored by the P-CSCF, the P-CSCF needs to authorize the UE to join the multicast group according to the multicast addresses and port numbers one by one. If the mapping relation between the BC service and the multicast address is stored by the access network instead of the P-CSCF, the P-CSCF needs to authorize the BC service. The network element of the access network performs authorization according to the multicast address and port number corresponding to the BC service.

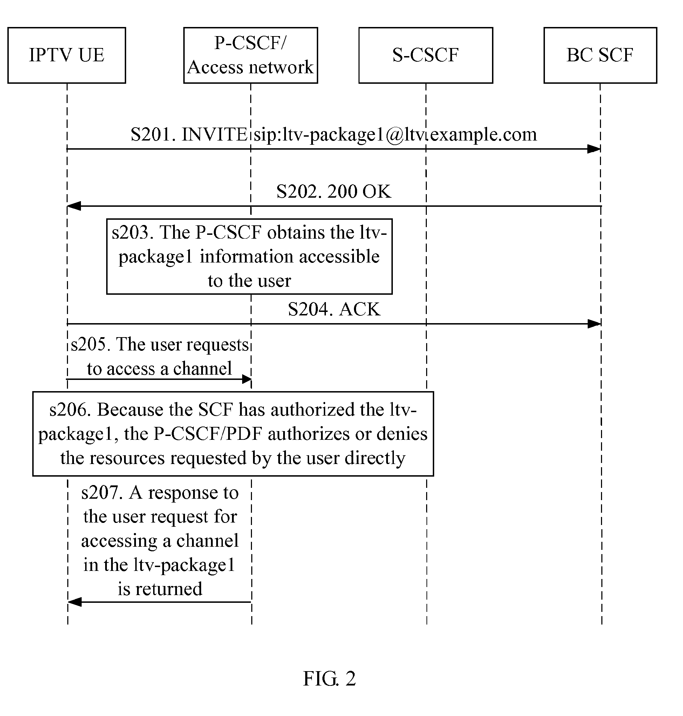

Currently, the IMS-based IPTV technical documents developed by the TISPAN standardization organization put forward a BC service package and a technology for a UE to initiate a service process to the BC service package. As shown in FIG. 2, this technology is equivalent to the following process: The UE requests to access a service package, and the SCF confirms that the user can access all BC services in the package. Upon completion of setting up the service, if BC service switching occurs in a package, the P-CSCF may authorize the resources locally. SIP messages are processed by the entity traversed by the messages, and are not exchanged from end to end. For example, an INVITE message is initiated by the IPTV UE, processed by the P-CSCF and the S-CSCF, and finally routed to the SCF.

In the process of implementing the present invention, the inventor finds at least the following defects in the prior art:
In the prior art, a package can be authorized at a single attempt, but the dependence on the package restricts the flexibility of service deployment and subscription drastically.

### Summary of the Invention

Embodiments of the present invention provide a method, system, and device for controlling authorization of service resources so that the authorization of resources used by a UE is controlled flexibly and conveniently.

A method for controlling authorization of service resources according to an embodiment of the present invention includes:
by a P-CSCF entity, receiving a message that carries a list of resources allowed to be used from an SCF entity; and
obtaining the list of resources allowed to be used from the message, and controlling authorization of resources requested by a UE according to the list of resources allowed to be used.

A system for controlling authorization of service resources according to an embodiment of the present invention includes:
a UE, configured to: send a request for using network resources to a P-CSCF entity, and send information about capabilities of the UE to an SCF entity, so that the SCF entity in a network can select a mode of sending a list of resources allowed to be used;
the P-CSCF entity, configured to control authorization of network resources requested by a UE according to the list of resources allowed to be used from the SCF entity; and
the SCF entity, configured to: receive the UE request for using network resources, and send a message that carries the list of resources allowed to be used to the P-CSCF entity.

A UE configured to send a request for using network resources to a network in an embodiment of the present invention includes:
a request sending module, configured to send a request for using network resources to a P-CSCF entity; and
a UE capability sending module, configured to send information about capabilities of the UE to an SCF entity, so that the SCF entity in a network can select a mode of sending a list of resources allowed to be used.

A P-CSCF entity configured to control authorization of service resources requested by a UE in an embodiment of the present invention includes:
a resource list obtaining module, configured to obtain a list of resources allowed to be used from a message sent by an SCF entity;
a resource list storing module, configured to store the list of resources allowed to be used which is obtained by the resource list obtaining module; and
an authorization controlling module, configured to control authorization of access network resources requested by the UE according to the list of resources allowed to be used which is stored in the resource list storing module.

An SCF entity configured to send a list of resources allowed to be used to a P-CSCF entity for controlling service authorization includes:
a UE resource list obtaining module, configured to obtain a list of resources allowed to be used by a UE; and
a resource list sending module, configured to send the list of resources allowed to be used which is obtained by the UE resource list obtaining module to the P-CSCF entity.

Compared with the prior art, the embodiments of the present invention bring at least the following benefits:
The SCF entity sends a list of resources allowed to be used to a P-CSCF entity. The P-CSCF entity performs authorization control for the resources allowed to be used by the user according to the list. Therefore, the service switching speed is increased, without any impact on the flexibility of the user in selecting the list of accessible services; and the service availability and the user experience are enhanced significantly.

### Brief Description of the Drawings

FIG. 1 shows a service function architecture of an IMS-based IPTV service in the prior art;
FIG. 2 is a flowchart of authorization control performed through a package in the prior art;
FIG. 3 is a flowchart of a method for controlling authorization of service resources according to a first embodiment of the present invention;
FIG. 4 is a flowchart of a method for controlling authorization of service resources according to a second embodiment of the present invention;
FIG. 5 is a flowchart of a method for controlling authorization of service resources according to a third embodiment of the present invention;
FIG. 6 is a flowchart of a method for controlling authorization of service resources according to a fourth embodiment of the present invention; and
FIG. 7 shows a structure of a system for controlling authorization of service resources according to an embodiment of the present invention.

### Detailed Description of the Embodiments

The embodiments of the present invention are detailed below with reference to accompanying drawings.

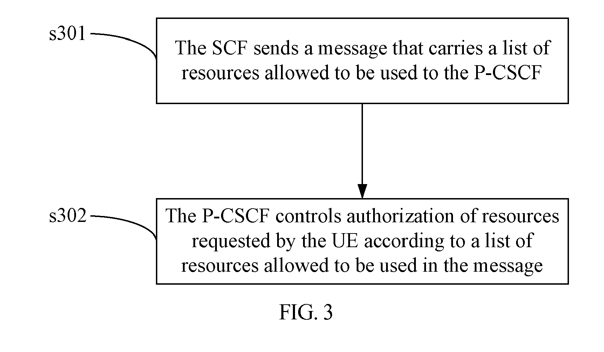

As shown in FIG. 3, a method for controlling authorization of service resources according to the first embodiment of the present invention includes:
Step s301: An SCF sends a message that carries a list of resources allowed to be used to a P-CSCF.

The list of resources allowed to be used is information about the service that the user subscribes to. The SCF may obtain the list of resources allowed to be used by the user from the entity that stores the service profile of the UE beforehand, for example, from a User Profile Service Function (UPSF). With respect to the obtaining mode, the SCF may obtain the list periodically, or obtain the list in real time every time when the SCF needs to send the message to the P-CSCF.

The message that carries the list of resources allowed to be used may be: a response message sent by the SCF to the P-CSCF after the SCF receives a service access request or a service modification request from the UE; or a service creation request or a service modification request sent by the SCF to the UE; or a NOTIFY message returned by the SCF to the P-CSCF after the SCF receives a SUBSCRIBE message from the P-CSCF. The SCF may send a list of resources allowed to be used by the UE through any of the messages above so that the P-CSCF can obtain the list of resources allowed to be used. With respect to the sending mode, the sent message that carries the list of resources allowed to be used may carry an address (address link) for accessing the list of resources allowed to be used, and the P-CSCF obtains the list of resources allowed to be used according to the access address to control authorization of service resources; or the sent message that carries the list of resources allowed to be used may carry complete contents of the list of resources allowed to be used, and the P-CSCF may use this list of resources allowed to be used to control authorization of service resources.

Step s302: According to the list of resources allowed to be used in the message, the P-CSCF controls authorization of resources requested by the UE.

If the message received by the P-CSCF carries an address for accessing the list of resources allowed to be used, the P-CSCF needs to obtain the list of resources allowed to be used according to the access address. If the message carries complete contents of the list of resources allowed to be used, the P-CSCF may authorize or deny the resources requested by the UE. The mode of expressing a service in the message that carries the list of resources allowed to be used may be: carrying at least one service identifier and/or service parameters; or carrying at least one service identifier; or carrying at least one service package, which includes at least one service identifier and/or service parameters; or carrying at least one service package set, which includes at least one service package carrying at least one service identifier and/or service parameters.

In practice, the function entity that controls service resources varies with the service. Supposing that the service is a BC service, the following describes a process for the P-CSCF to obtain the list of resources allowed to be used from the entity that controls the BC service resources, and control authorization of the BC service resources.

In the BC service according to the second embodiment of the present invention, the SCF delivers the list of resources allowed to be used to the P-SCSF through a message, as detailed below. Specifically, after receiving a request for accessing a BC service from the IPTV UE, the SCF returns a response to the request of the IPTV UE, and delivers a list of BC services accessible to the user to the P-CSCF. The P-CSCF obtains the list of accessible BC services from the response and stores the list, and authorizes or denies the access of the user according to the list of BC services allowed to be used by the user. The list of BC services allowed to be used includes information about the resources allowed to be used explicitly or implicitly. For example, the list of BC services allowed to be used includes information about resources of each BC service allowed to be used, namely, explicitly carries the information about the list of resources allowed to be used; or the P-CSCF locally sets a mapping relation between the BC service identifier and the information about resources allowed to be used, which means that the list of BC services allowed to be used implicitly includes the information about resources allowed to be used; or the combination of both modes is applied, which means that the list of BC services allowed to be used includes the information about the resources of each BC service allowed to be used, and that the P-CSCF locally sets a mapping relation between the BC service identifier and the information about resources allowed to be used.

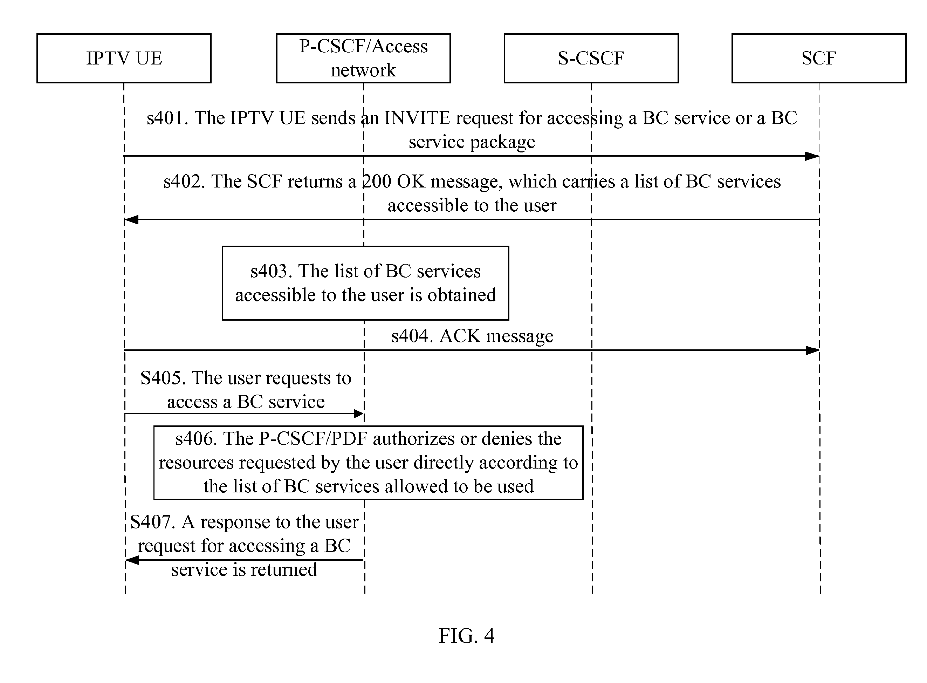

As shown in FIG. 4, a method for controlling authorization of service resources according to this embodiment includes:
Step s401: The IPTV UE sends an INVITE request for accessing a BC service or a BC service package to the SCF. The INVITE request message is not exchanged directly from end to end, but is processed by the entity traversed by the request. That is, the INVITE message is initiated by the IPTV UE, processed by the P-CSCF and the S-CSCF, and finally routed to the SCF.
Step s402: While returning a response to the INVITE request of the IPTV UE, the SCF delivers a list of BC services accessible to the user to the P-CSCF. In this step, the SCF needs to deliver the list of BC services accessible to the user through the response. The list of BC services accessible to the user may be in the form of a header field, or a specified message body. For example, the list of BC services is carried in a header field or a specified message body.
Step s403: The P-CSCF obtains the list of BC services accessible to the user from the response returned by the SCF.
Step s404: The IPTV UE sends an ACK message to the SCF.
Step s405: The IPTV UE sends a request for accessing BC service data to the P-CSCF/access network.
Step s406: The P-CSCF/access network authorizes or denies the resources requested by the user according to the list of BC services accessible to the user.
Step s407: The P-CSCF/access network sends an access response to the IPTV UE.

In the steps above, the authorization of the BC service resources is controlled according to a list of BC services accessible to the user, where the list is delivered by the SCF. Considering that the SCF needs to deliver a resource authorization list according to the capabilities of the entities such as the P-CSCF, the P-CSCF and the UE may report their capabilities to the SCF beforehand in the following way:
The UE reports its capabilities in an INVITE request message, and the P-CSCF reports its capabilities when forwarding the INVITE request message of the IPTV UE. The specific reporting steps are as follows:
   A. A new Option Tag such as resource-auth-list is defined. The UE and the P-CSCF use a header field such as "Supported" and "Require" to carry the Option Tag to indicate support of the resource authorization list, or indicate that the SCF needs to support the resource authorization list.
   B. The UE and the P-CSCF may send a SIP header field (such as "P-Batch-Resource-Auth") which carries a resource authorization list to indicate that the resource authorization list can be delivered through this header field.
   C. The UE and the P-CSCF may send message body type information (such as "Accept-Content: application/resource-auth-list") which carries a resource authorization list to indicate that the resource authorization list can be delivered through a specified message body.

In the foregoing mode, after detecting that the entities such as the UE and the P-CSCF support delivery of a list of BC services accessible to the user in the specified or unspecified mode or need such delivery, the SCF uses a proper signaling message (such as an INVITE or 200 OK response message) and a mode (such as "P-Batch-Resource-Auth" header field or "application/resource-auth-list" message body) to deliver a resource authorization list.

In step s402, the SCF may deliver the list of BC services accessible to the user in the following modes.

Mode 1: The list of BC services accessible to the user is delivered through a link.

Specifically, the 200 OK response message, for example, carries a location link (such as an HTTP link) to a list of BC services allowed to be used by the user. In this case, the entities such as the P-CSCF may use the corresponding protocol process to obtain the list of resources allowed to be used from the specified location, for example:
P-Batch-Resource-Auth: http://bc-service.example.com/user1-data.xml

The e P-Batch-Resource-Auth header field carries a location link "http://bc-service.example.com/userl-data.xml" (namely, a list of resources allowed to be used) which provides resource authorization. After receiving the 200 OK response message, the entities such as the P-CSCF obtain the user resource authorization information from the specified location through HTTP, and perform resource authorization control locally.

Mode 2: The list of BC services accessible to the user is delivered directly.

Specifically, the 200 OK response message, for example, carries complete contents of the list of BC services allowed to be used by the user. In this case, the entities such as the P-CSCF may use the list of BC services allowed to be used to control the resource authorization. For example, the 200 OK response message carries the following contents:

```
    SIP/2.0 200 OK
    Content-Type: application/resource-auth-list
    Content-Length: (...)
    <package name="example-package1"; service-desc="all-entries"/>
    <package name="example-package1"; service-desc="all-entries"/>
    <package name="example-package2"; service-desc="as-default"/>
    <package name="example-package3" />
    <package name="example-package4";
     service-desc="only-listed-entries">
    <entry service="bcl-in-example-package4"/>
    <entry service="bc2-in-example-package4"/>
    </package>
    <package name="example-package5";
     service-desc="all-but-excluding-listed-entries">
    <entry service="bcl-in-example-package5"/>
    <entry service="bc2-in-example-package5"/>
    </package>
```

The message body type is an application/resource-auth-list, indicating that a resource authorization list is carried. In the contents of the message body, a "name" parameter of the "package" tag describes the package accessible to the user; "service-desc" (service description) describes the meanings of the sub-tag "entry", and is used with the "service" tag to describe the user rights, which will be described in more detail hereinafter.

In mode 1 and mode 2 above, after receiving the 200 OK response message, the entities such as the P-CSCF perform resource authorization control locally according to the list of BC services accessible to the user in the 200 OK response message. No matter which mode is applied, the list of resources allowed to be used needs to be obtained. The list of resources allowed to be used describes the BC services or resources accessible to the user. The link "http://bc-service.example.com/userl-data.xml" in mode 1 and the message body in mode 2 may be described in many modes. Given below are two different description modes.

### (1) The first description mode of the BC service resource list is to describe the detailed parameters of the BC service.

Specifically, the following description mode is applicable:

```
    Content-Type: application/resource-auth-list
    Content-Length: (...)

    <service name="sip:movie.ltv.topway.com.cn">
    <media type="RTP/AVP/audio",
       maddr="225.1.2.3", mport=" 10000", codec="PCMU/8000", pt="0"/>
    <media type="RTP/AVP/video",
       maddr="225.1.2.3", mport=" 10002", codec="H264/8000", pt="34"/>
    </service>
```

The "service" tag describes the detailed contents of the service allowed to be used. The "name" property identifies a service allowed to be used or quotes a specific BC service identifier. For example, the "name" property is "sip: movie.ltv.topway.com.cn". The "media" tag describes the media information of the BC service; "type" indicates the BC service type; "RTP/AVP/audio" indicates audio of the RTP audio and video protocol; "maddr" indicates the multicast group address such as "225.1.2.3"; "mport" indicates a port number such as "10000"; "codec" indicates the coding mode such as "PCMU/8000"; and "pt" indicates the payload type.

### (2) The second description mode of the BC service resource list is to identify the multicast groups allowed to be used one by one.

To implement a BC service, the deployment of the BC service needs support of a P-CSCF. Therefore, if the P-CSCF locally understands the relation between the BC identifier (or another identifier understandable to the P-CSCF) and the controlled multicast group, the SCF delivers only the BC identifier allowed to be used by the user to the P-CSCF. According to the identifier of the BC service allowed to be used by the user, the P-CSCF determines the multicast group which the user can join. For example:

```
    Content-Type: application/resource-auth-list
    Content-Length: (...)

    <entry service="sip:movie.ltv.topwei.com.cn"/>
    <entry service="sip:news.ltv.topwei.com.cn"/>
    <entry service="sipaports.ltv.topwei.com.cn"/>
```

### (3) The third description mode of the BC service resource list is to send information about accessible BC services according to packages.

One BC service package includes 0 or more BC services. The user may subscribe to each package, or further, subscribe to each BC service in each package. Therefore, the SCF may deliver information about the BC services accessible to the user to the P-CSCF according to packages. Each package may include only specified BC services, all BC services except specified BC services, all BC services, default BC services, and so on. For example:

```
    Content-Type: application/resource-auth-list

    <package name="example-package1 "; service-desc="all-entries"/>
    <package name="example-package1 "; service-desc="all-entries"/>
    <package name="example-package2"; service-desc="as-default"/>
    <package name="example-package3" />
    <package name="example-package4"; service-desc="only-listed-entries">
    <entry service-name="servicel-in-example-package4"/>
    <entry service-name="service2-in-example-package4"/>
    </package>
```

The "package" tag describes the service package accessible to the user, and the "name" property describes the package subscribed to by the user. The BC service description method "service-desc" specifies the BC services accessible to the user. The service-desc may be:
1. all-entries: The user is authorized to access all BC services in the package.
2. as-default: The default access control mode is applied to control the access rights. The prerequisite of this scenario is that the default rights to access each package are configured locally on the entities such as the P-CSCF.
3. Null: When no service-desc tag is carried, "as-default" applies.
4. only-listed-entries: The user has only the rights to access the BC services listed in the "entry" tag.
5. all-but-excluding-listed-entries: The user has the rights to access all the BC services in the package except the BC services listed in the "entry" tag in the package.
6. default-with-exception: The user has the rights to access the BC services listed in the "in-entry" tag on the basis of the "as-default" control mode except the BC services listed in the "out-entry" tag.

The prerequisite of scenarios 3 and 6 is that the default rights to access each package are configured locally on the entities such as the P-CSCF.

### (4) The fourth description mode of the BC service resource list is to send information about accessible BC services according to the package set.

Further, because most users tend to subscribe to the same package or the packages subscribed to by the users converge into several packages, one or more package sets (package-set) may be configured on the P-CSCF. The SCF may add or delete some packages or BC services based on the package set, as shown below:

```
    Content-Type: application/resource-auth-list

    <package-set name="package-set-1 "/>
    <package-set name="package-set-2">
       <package name="example-package1 "; service-desc="all-entries"/>
       <package name="example-package1 "; service-desc="all-entries"/>
       <package name="example-package2"; service-desc="as-default"/>
       <package name="example-package3" />
         <package name="example-package4";service-desc="only-listed-entries">
           <entry service-name="servicel-in-example-package4"/>
           <entry service-name="service2-in-example-package4"/>
         </package>
       </package-set>
```

The "name" property in the "package-set" tag describes the names of the package sets accessible to the user. The user may have the rights to access all default packages and BC services in one or more package sets, and may remove one or more packages in a package set, or describe a package in more detail according to the method in the third description mode of the BC service resource list above.

In the second embodiment above, an INVITE message is exchanged between entities such as the SCF and the P-CSCF to obtain the list of resources accessible to the user. The list of the accessible resources may also be obtained through a SUBSCRIBE message or a NOTIFY message.

In the third embodiment of the present invention, taking the BC service as an example, a method for controlling authorization of service resources includes this step: The SCF returns a response to the IPTV UE after receiving a request for accessing a BC service from the IPTV UE. The IPTV UE sends an ACK message to the SCF after receiving the response. The P-CSCF sends a SUBSCRIBE message to the SCF to subscribe to the list of resources allowed to be used. After receiving the SUBSCRIBE message, the SCF sends a 200 OK response message to the P-CSCF, and sends a NOTIFY message to the P-CSCF, indicating the list of resources allowed to be used. The P-CSCF obtains the list of resources accessible to the user from the NOTIFY message, and authorizes or denies the user access according to the received list of resources allowed to be used by the user.

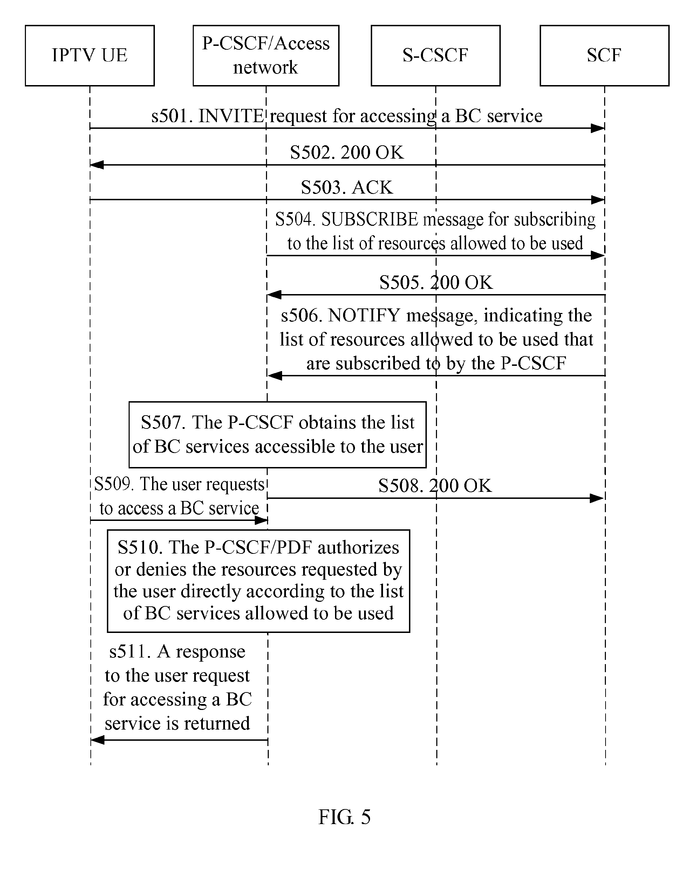

As shown in FIG. 5, the process in this embodiment includes the following steps:
Step s501: The IPTV UE sends an INVITE request for accessing a BC service to the SCF.
Step s502: After receiving the INVITE request, the SCF sends a 200 OK response to the IPTV UE.
Step s503: The IPTV UE sends an ACK message to the SCF after receiving the 200 OK response.
Step s504: The P-CSCF sends a SUBSCRIBE message to the SCF to subscribe to the list of resources allowed to be used.

The Event header field of the SUBSCRIBE message carries an event type of requesting a list of resources allowed to be used (for example, "resource-auth-list"). Optionally, an "aor" parameter in the header field indicates the list of resources allowed to be used by a specified user. If the SUBSCRIBE message does not belong to the SIP dialog created through the request message but it is necessary to obtain the list of resources accessible to the session created through the request (that is, the P-CSCF serves as a proxy, and is unable to serve as a User Agent (UA) to send a request in the dialog to which the request message belongs, and it is necessary to control the session created through the request message), the Event header field further carries a SIP session identifier (such as Call-ID, From-tag, and To-tag), indicating the need of obtaining the list of resources allowed to be used that are related to the SIP session identified by the session ID.

Step s505: After receiving the SUBSCRIBE message, the SCF sends a 200 OK response to the P-CSCF.

Step s506: The SCF sends a NOTIFY message to the P-CSCF, indicating the list of resources allowed to be used that are subscribed to by the P-CSCF. The delivery mode and the detailed contents of the NOTIFY message are similar to the delivery mode and the detailed contents of the 200 OK response message in the second embodiment, and are not described further.

Step s507: The P-CSCF obtains the list of resources accessible to the user from the NOTIFY message.

Step s508: After obtaining the list of the resources allowed to be used, the P-CSCF sends a 200 OK response to the SCF.

Step s509: The IPTV UE sends a request for accessing BC service data to the P-CSCF/access network.

Step s510: The P-CSCF/access network authorizes or denies the resources requested by the IPTV UE according to the list of resources allowed to be used.

Step s511: The P-CSCF/access network sends a response to the IPTV UE in response to the request for accessing the BC service data.

In the foregoing embodiment, the P-CSCF subscribes to the list of resources allowed to be used from the SCF because the information about the services allowed to be used by the user may include the information about the resources allowed to be used implicitly or explicitly. Therefore, the substitute P-CSCF may subscribe to the list of services allowed to be used from the SCF. By referring to the foregoing embodiment, those skilled in the art can easily infer the method for the P-CSCF to subscribe to the list of services allowed to be used from the SCF and the method for the SCF to return the list of services allowed to be used to the P-CSCF.

Through the method in this embodiment, the list of accessible resources or services may be obtained through a SUBSCRIBE message or a NOTIFY message exchanged between the P-SCSF and the SCF. In the foregoing process, the subscription process occurs after the INVITE session is created. In practice, the SUBSCRIBE/NOTIFY process may occur at any stage of the INVITE session, or occur independently of the INVITE session.

In the second embodiment and the third embodiment above, an INVITE or SUBSCRIBE or NOTIFY message is exchanged between entities such as the SCF and the P-CSCF to obtain the list of resources accessible to the user. After obtaining the list of resources accessible to the user, the P-CSCF needs to resolve and process the list of resources allowed to be used. For example, the information about the list of resources allowed to be used includes a BC service identifier, a BC service package identifier, or a BC service package set, and no mapping relation between the identifier and the BC service parameter is stored locally, and therefore, the P-CSCF needs to obtain the list of resources allowed to be used from other servers in the network; or, if the list is delivered through a link, the P-CSCF needs to obtain the list from the link.

In the fourth embodiment of the present invention, the SCF sends a message to the UE or P-CSCF, and the message carries parameters of the initial BC service created or modified currently. The initial BC service is the BC service first accessed by the UE after successfully setting up or modifying the service as decided or suggested by the SCF. The initial BC service may be a BC service specified when the UE sends a request for setting up or modifying a service, or determined by the SCF according to the data configuration or the local policy. The message that carries the parameters of the initial BC service created or modified currently is a session creation request or response message sent by the SCF to the UE, or a session modification request or response message sent by the SCF to the UE, or any other message sent by the SCF to the UE or P-CSCF. If the message that carries parameters of the initial BC service created or modified currently is sent by the SCF to the UE, the message that carries parameters of the initial BC service created or modified currently passes through the P-CSCF and is finally routed to the UE. Therefore, the P-CSCF may obtain the parameters of the initial BC service when the P-CSCF processes this message. The parameters include resource authorization information, identifier of the initial BC service, and/or network parameters.

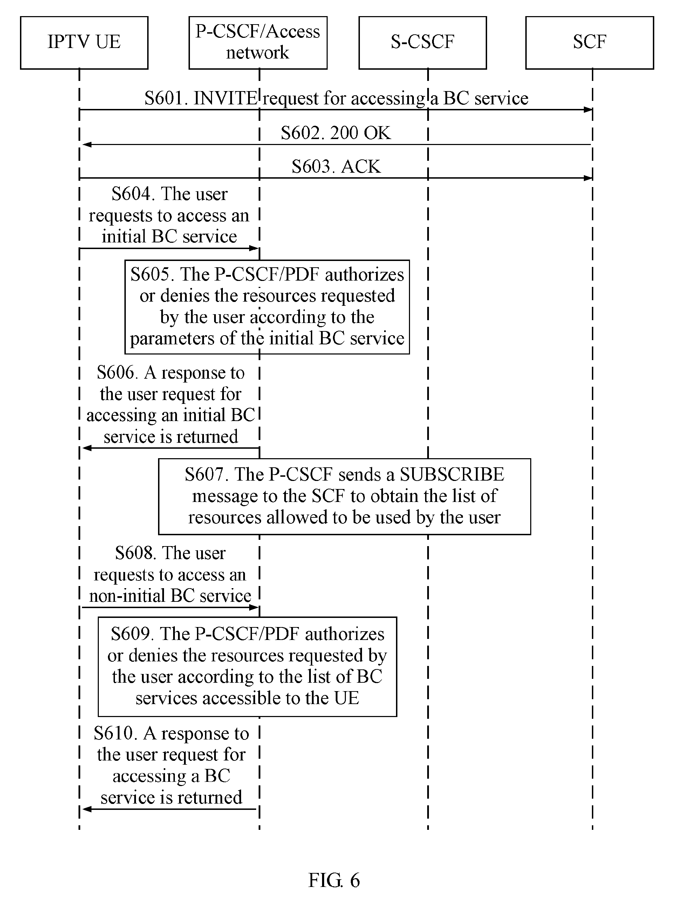

As shown in FIG. 6, the process in this embodiment includes the following steps:
Step s601: The IPTV UE sends an INVITE request for accessing a BC service to the SCF.
Step s602: After receiving the INVITE request, the SCF sends a 200 OK response to the IPTV UE. The 200 OK response carries parameters of an initial BC service, and may further carry information about a list of resources allowed to be used. The parameters of the initial BC service include the resource authorization information and the identifier of the initial BC service.

This 200 OK response is processed by the P-CSCF, and finally routed by the P-CSCF to the UE. Therefore, when processing the 200 OK response, the P-CSCF may obtain the parameters of the initial BC service, and quickly authorize the user to access the BC service through network resources.

If the 200 OK response includes information about the list of resources allowed to be used and is delivered through a link, the P-CSCF needs to obtain the list of resources allowed to be used from the link location. In this scenario, the P-CSCF may forward the 200 OK response to the UE, and then obtain the list of resources allowed to be used according to the link address; or the P-CSCF obtains the list of resources allowed to be used according to the link address, processes the list completely or successfully, and then forwards the 200 OK response to the UE.

If the 200 OK response includes information about the list of resources allowed to be used, which includes a BC service identifier, a BC service package identifier or a BC service package set, and the P-CSCF does not store the mapping relation between the identifier and the BC service parameter, the P-CSCF may forward the 200 OK response to the UE first, and then obtain the mapping relation between the identifier and the BC service parameter from other servers (for example, the server that stores the BC service identifier/BC service package identifier, and the mapping relation between the BC service and the BC service parameter) in the network; or, the P-CSCF obtains the mapping relation between the identifier and the BC service parameter from other servers in the network completely or successfully, and then forwards the 200 OK response to the UE.

The parameters of the BC service initially created in the 200 OK response may be described and carried through SDP, for example:
SIP/2.0 200 OK
Content-Type: application/SDP
Content-Length: (...)
v=0
o=scf 2890844526 2890842807 IN IP4 10.47.16.5
s=BC service
i=Current-BC: sip:bc-servicel@example.com
c=IN IP4 224.2.17.12
b=CT: 120
t=0 0
a=sendonly
m=audio 49170 RTP/AVP 0
m=video 51372 RTP/AVP 99
a=rtpmap:99 h263-1998/90000

For example, in the foregoing instance, "i=" carries an initial BC service identifier; the "c=" line describes the mode of delivering the BC service contents (through IPv4BC and the multicast address is 224.2.17.12); "i=" carries the identifier of the initial BC service; "b=" carries the bandwidth requirement of the initial BC service; the "m=" line and the "a=" line together describe the BC port of the initial BC service, coding mode and decoding mode of the BC service, and the parameters required in the coding and decoding.

The parameters of the initial BC service may be carried through SDP, or by other means.

Step s603: The IPTV UE sends an ACK message to the SCF after receiving the 200 OK response.

Step s604: The IPTV UE sends a request for accessing BC service data to the P-CSCF/access network.

Step s605: The P-CSCF/access network authorizes or denies the resources requested by the IPTV UE according to the initial BC service contents carried in the sX02.

Step s606: The P-CSCF/access network sends a response to the IPTV UE in response to the request for accessing the BC service data.

Step s607: If the SDP in step s602 carries no list of resources allowed to be used, the P-CSCF obtains the list of resources or services allowed to be used through a SUBSCRIBE/NOTIFY message in the method described in the third embodiment, for example, through steps 5504-5508 in the third embodiment.

In the process of using the BC service, if the user requests service switching, for example, requests to switch the LTV channel, the process proceeds to the following steps:
Step s608: The IPTV UE sends a request for accessing BC service data to the P-CSCF/access network.
Step s609: If the P-CSCF/access network already obtains a list of resources allowed to be used, the P-CSCF authorizes or denies the resources requested by the IPTV UE according to whether the list of resources allowed to be used allows the user to access the target BC service. If the P-CSCF does not obtain a list of resources allowed to be used, the P-CSCF may process the resource request according to the local configuration, and authorize or deny the resources requested by the IPTV UE.
Step s610: The P-CSCF/access network sends a response to the IPTV UE in response to the request for accessing the BC service data.

Through the method in this embodiment, a list of accessible resources or services is obtained in BC service mode.

The foregoing embodiment deals with how to carry the contents of a BC service created currently in an initial service creation process initiated by the IPTV UE. According to the foregoing embodiment, those skilled in the art can easily infer the method for transferring the current BC service contents in the service modification process initiated by the IPTV UE, the initial service creation process and the service modification process initiated by the IPTV SCF, and other possible service processes, and/or infer the service process and the method for the P-CSCF to obtain the list of resources allowed to be used.

Through the method for controlling authorization of service resources in the second embodiment, third embodiment and fourth embodiment, the IMS-based IPTV BC service enables the SCF to deliver the list of resources allowed to be used by the user. In this way, the entities such as the P-CSCF can obtain the list of resources allowed to be used by the user in time. A complete solution is provided to enable the UE, the P-CSCF and the access network to work together to access resources quickly. The foregoing embodiment takes a BC service as an example for describing the process and the implementation mode of controlling authorization of the BC service resources. In the practical application, the function entity that controls authorization of other resources may exercise control in the same way, and obtain the list of resources allowed to be used from the entity that performs the service control, thus controlling authorization of service resources. The entity that performs the service control may work in the same way as the SCF in the foregoing embodiment. For example, in a resource access control sub-network, a list of resources allowed to be used may be obtained from the Application Server (AS) that provides other service functions, and the service resource authorization is controlled. The method for controlling authorization of other service resources is not described further herein.

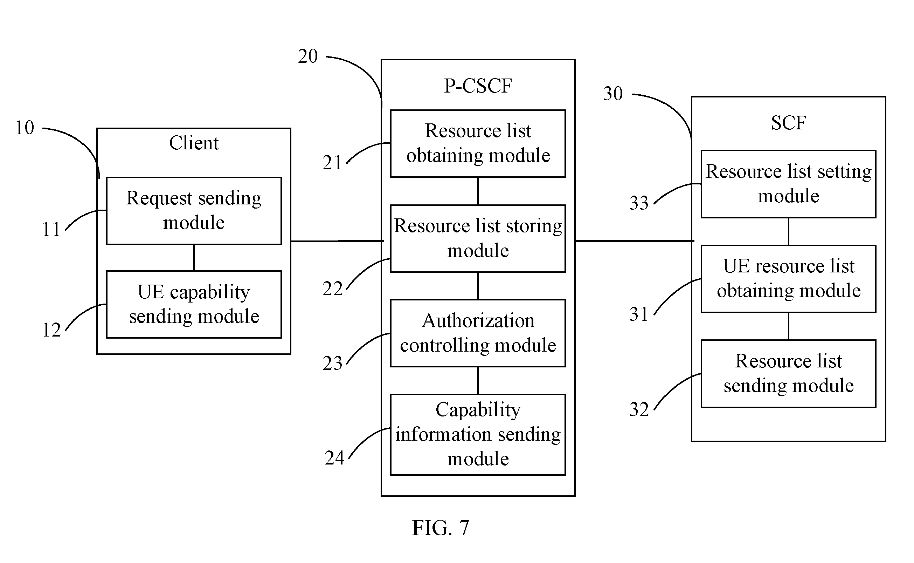

A system for controlling authorization of service resources is provided in an embodiment of the present invention. As shown in FIG. 7, the system includes at least one UE 10, a P-CSCF 20, and an SCF 30.

The UE 10 is configured to: send a request for using network resources to the SCF 30, and send information about capabilities of the UE 10 to the SCF 30. According to the capability information, the SCF 30 in the network selects the mode of sending the list of resources allowed to be used. The request for using network resources may be a service access request message or a service modification request message.

The P-CSCF 20 is configured to control authorization of network resources requested by the UE according to the list of resources allowed to be used from the SCF 30.

The SCF 30 is configured to: receive the UE request for using network resources, and send a message that carries the list of resources allowed to be used to the P-CSCF 20.

The message that carries the list of resources allowed to be used may be: a response message sent by the SCF 30 to the P-CSCF 20 after the SCF 30 receives a service access request or a service modification request from the UE 10; or a service creation request or a service modification request sent by the SCF 30 to the UE 10; or a NOTIFY message returned by the SCF 30 to the P-CSCF 20 after SCF 30 receives a SUBSCRIBE message from the P-CSCF 20. The SCF 30 may send a list of resources allowed to be used by the UE 10 through any of the messages above so that the P-CSCF 20 can obtain the list of resources allowed to be used. With respect to the sending mode, the sent message that carries the list of resources allowed to be used may carry an address (address link) for accessing the list of resources allowed to be used, and the P-CSCF 20 obtains the list of resources allowed to be used according to the access address to control authorization of service resources; or the sent message that carries the list of resources allowed to be used may carry complete contents of the list of resources allowed to be used, and the P-CSCF 20 may use this list of resources allowed to be used to control authorization of service resources.

Specifically, as shown in FIG. 7, the UE 10 further includes:
a request sending module 11, configured to send a request for using network resources to the SCF 30; and
a UE capability sending module 12, configured to send information about capabilities of the UE to the SCF 30, so that the SCF 30 can select a mode of sending a list of resources allowed to be used, where the capability information may be carried in the request sent by the UE.

Specifically, the P-CSCF 20 further includes: a resource list obtaining module 21, a resource list storing module 22, and an authorization controlling module 23.

The resource list obtaining module 21 is configured to obtain a list of resources allowed to be used from a message sent by the SCF 30. This message may be a 200 OK response or a NOTIFY message sent by the SCF 30. For example, the 200 OK response is sent by the SCF 30 to the P-CSCF 20 after the SCF 30 receives a service access request or a service modification request from the UE 10. The request is a service creation request or a service modification request sent by the SCF 30 to the UE 10. The SCF 30 returns the NOTIFY message to the P-CSCF 20 after receiving a SUBSCRIBE message sent by the P-CSCF 20.

The resource list storing module 22 is connected to the resource list obtaining module 21, and configured to store the list of resources allowed to be used which is obtained by the resource list obtaining module 21.

The authorization controlling module 23 is connected to the resource list storing module 22, and configured to control authorization of the user request for using access network resources according to the list of resources allowed to be used which is stored in the resource list storing module 22.

The P-CSCF 20 further includes a capability information sending module 24, which is configured to send information about capabilities of the UE to the SCF 30 so that the SCF 30 can select a mode of sending a list of resources allowed to be used.

Specifically, the SCF 30 further includes:
a UE resource list obtaining module 31, configured to obtain the list of resources allowed to be used by the UE 10 from the entity that stores the service profile (for example, a UPSF in the network) periodically or in real time; and
a resource list sending module 32, connected to the UE resource list obtaining module 31 and configured to send the list of resources allowed to be used which is obtained by the UE resource list obtaining module 31 to the P-CSCF 20 through a 200 OK response or a NOTIFY message, where the resource list is used by the P-CSCF 20 to control authorization of the UE request.

The SCF 30 further includes a resource list setting module 33, which is configured to set the mode of sending the resource list from the resource list sending module 32 according to the capability information sent by the P-CSCF 20 and the UE 10.

Through the system in the foregoing embodiment, the SCF 30 delivers a list of resources allowed to be used (for example, a list of BC services allowed to be used), so that the entities such as the P-CSCF 20 can obtain the list of resources allowed to be used by the user in time, and a complete solution is provided to enable the UE, the P-CSCF and the access network to work together to access resources quickly.

After reading the foregoing embodiments, those skilled in the art are clearly aware that the present invention may be implemented through hardware, or through software in addition to a necessary universal hardware platform. The technical solution under the present invention may be embodied as a software product. The software product may be stored in a non-volatile storage medium (such as a CD-ROM, a USB flash disk, or a mobile hard disk), and may include several instructions that enable a computer device (such as a personal computer, a server, or a network device) to perform the methods provided in the embodiments of the present invention.

Although the invention has been described through several exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A method for controlling authorization of service resources, comprising:
by a Proxy Call Session Control Function entity, P-CSCF, receiving a message that carries a list of resources allowed to be used from a Service Control Function entity, SCF; and
obtaining the list of resources allowed to be used from the message, and controlling authorization of resources requested by a User Equipment, UE according to the list of resources allowed to be used.

2. The method of claim 1, wherein before the P-CSCF receives the message that carries the list of resources allowed to be used from the SCF, the method further comprises:
obtaining in real time , or obtaining periodically, by the SCF, the list of resources allowed to be used by the UE.

3. The method of claim 1, wherein the process of obtaining the list of resources allowed to be used from the message and controlling authorization of the resources requested by the UE according to the list of resources allowed to be used comprises:
by the P-CSCF, obtaining parameters of an initial Broadcast service created or modified currently, wherein the parameters are carried in the message; and controlling authorization of the resources requested by the UE according to the parameters.

4. The method of claim 1, wherein the message that carries the list of resources allowed to be used comprises:
an address for accessing the list of resources allowed to be used; or a complete list of resources allowed to be used.

5. The method of claim 4, wherein if the message that carries the list of resources allowed to be used comprises the address for accessing the list of resources allowed to be used, after the P-CSCF receives the message that carries the list of resources allowed to be used from the SCF, the method further comprises:
obtaining, by the P-CSCF, the list of resources allowed to be used according to the address.

6. The method of claim 4 or 5, wherein contents of the list of resources allowed to be used comprise at least one of the following:
at least one of a service identifier and a service parameter;
a service identifier;
a service package, wherein the service package comprises at least one of a service identifier and a service parameter; and
a service package set, wherein the service package set comprises at least one service package and each service package comprises at least one of a service identifier and a service parameter.

7. The method of claim 1, wherein the P-CSCF receives the message that carries the list of resources allowed to be used from the SCF in the following way:
the P-CSCF forwards the UE's request message to the SCF; and
the P-CSCF receives a response message from the SCF, wherein the response message carries the list of resources allowed to be used.

8. The method of claim 7, wherein:
the request message carries the modes of sending the list of resources allowed to be used, wherein the modes are supported by the UE, and/or the modes of sending the list of resources allowed to be used, wherein the modes are supported by the P-CSCF, so that the SCF can select a mode of sending the list of resources allowed to be used.

9. The method of claim 7, wherein the response message carries the list of resources allowed to be used in the following way:
the response message carries a list of Broadcast services allowed to be used, and the list of broadcast services allowed to be used comprises the list of resources allowed to be used explicitly or implicitly.

10. The method of claim 1, wherein the P-CSCF receives the message that carries the list of resources allowed to be used from the SCF in the following way:
the P-CSCF sends a subscribe message to the SCF; and
the P-CSCF receives a notify message from the SCF, wherein the notify message carries the list of resources allowed to be used.

11. The method of claim 10, wherein:
the subscribe message carries the modes of sending the list of resources allowed to be used, wherein the modes are supported by the P-CSCF, so that the SCF can select a mode of sending the list of resources allowed to be used.

12. A system for controlling authorization of service resources, comprising:
a Proxy Call Session Control Function entity, P-CSCF, configured to control authorization of network resources requested by a User Equipment, UE, according to a list of resources allowed to be used from a Service Control Function entity, SCF; and
the SCF, configured to: receive the UE's request message for using network resources, and send a message that carries the list of resources allowed to be used to the P-CSCF.

13. The system of claim 12, wherein the P-CSCF further comprises:
a resource list obtaining module, configured to obtain the list of resources allowed to be used from the message sent by the SCF;
a resource list storing module, configured to store the list of resources allowed to be used which is obtained by the resource list obtaining module; and
an authorization controlling module, configured to control authorization of access network resources requested by the UE according to the list of resources allowed to be used which is stored in the resource list storing module.

14. The system of claim 13, wherein the P-CSCF further comprises:
a capability information sending module, configured to send information about capabilities of the P-CSCF to the SCF so that the SCF can select a mode of sending the list of resources allowed to be used.

15. The system of claim 12, wherein the SCF further comprises:
a UE resource list obtaining module, configured to obtain the list of resources allowed to be used by a UE; and
a resource list sending module, configured to send the list of resources allowed to be used by the UE which are obtained by the UE resource list obtaining module to the P-CSCF.

16. The system of claim 15, wherein the SCF further comprises:
a resource list setting module, configured to set a mode of sending the list of resources allowed to be used according to the information about capabilities received from the P-CSCF and the UE.

17. A User Equipment, UE, configured to send a request message for using network resources to a network, comprising:
a request sending module, configured to send a request message for using network resources to a Proxy Call Session Control Function entity, P-CSCF; and
a UE capability sending module, configured to send information about capabilities of the UE to a Service Control Function entity, SCF, so that the SCF in a network can select a mode of sending a list of resources allowed to be used.

18. A Proxy Call Session Control Function entity, P-CSCF, configured to control authorization of service resources requested by a User Equipment, UE, comprising:
a resource list obtaining module, configured to obtain a list of resources allowed to be used from a message sent by a Service Control Function entity, SCF;
a resource list storing module, configured to store the list of resources allowed to be used which is obtained by the resource list obtaining module; and
an authorization controlling module, configured to control authorization of access network resources requested by the UE according to the list of resources allowed to be used which is stored in the resource list storing module.

19. The P-CSCF of claim 18, further comprising:
a capability information sending module, configured to send information about capabilities of the P-CSCF to the SCF so that the SCF can select a mode of sending the list of resources allowed to be used.

20. A Service Control Function entity, SCF, configured to send a list of resources allowed to be used to a Proxy Call Session Control Function entity, P-CSCF, for controlling service authorization, comprising:
a User Equipment, UE, resource list obtaining module, configured to obtain a list of resources allowed to be used by a UE; and
a resource list sending module, configured to send the list of resources allowed to be used which is obtained by the UE resource list obtaining module to the P-CSCF.

21. The SCF of claim 20, further comprising:
a resource list setting module, configured to set a mode of sending the list of resources allowed to be used according to capability information received from the P-CSCF and the UE.
